# EUROPÄISCHE PATENTSCHRIFT

(11) **EP 3 159 230 B1**
(45) Veröffentlichungstag und Bekanntmachung des Hinweises auf die Patenterteilung: **22.07.2020**
(21) Anmeldenummer: 16194364.2
(22) Anmeldetag: 18.10.2016
(51) Int. Cl.: B60T 8/1755, B60W 30/02

(54) **VERFAHREN ZUM BETRIEB EINES FAHRDYNAMIKREGELUNGSSYSTEMS EINES KRAFTFAHRZEUGS UND KRAFTFAHRZEUG**
METHOD FOR OPERATING A DRIVING DYNAMICS SYSTEM OF A MOTOR VEHICLE AND MOTOR VEHICLE
PROCÉDÉ DE FONCTIONNEMENT D'UN SYSTÈME DE COMMANDE DE DYNAMIQUE DE VÉHICULE ET VÉHICULE

(30) Priorität: 21.10.2015 DE 102015013599
(43) Veröffentlichungstag der Anmeldung: 26.04.2017
(73) Patentinhaber: AUDI AG, 85045 Ingolstadt (DE)
(72) Erfinder: Schneider, Wladimir, 86633 Neuburg a.d. Donau (DE)

(56) Entgegenhaltungen:
- EP-A2- 2 862 767
- WO-A2-2015/014583
- DE-A1-102004 020 110
- DE-A1-102009 022 302
- DE-A1-102011 055 685
- DE-A1-102011 085 140
- DE-A1-102012 212 616
- DE-A1-102013 203 775

## Beschreibung

Die Erfindung betrifft ein Verfahren zum Betrieb eines Fahrdynamikregelungssystems eines Kraftfahrzeugs, wobei das Fahrdynamikregelungssystem zur Durchführung wenigstens eines insbesondere nicht alle Räder des Kraftfahrzeugs betreffenden Bremseingriffs bei Erfüllung eines wenigstens einen Eingriffsschwellwert für wenigstens eine aktuelle Fahrdynamikgröße des Kraftfahrzeugs nutzenden Eingriffskriteriums ausgebildet ist und das Kraftfahrzeug ferner wenigstens ein Sicherheitssystem aufweist, welches bei Erfüllung eines die aktuelle Fahrsituation beschreibende Fahrsituationsdaten auswertenden Maßnahmenkriteriums zur Durchführung einer die Sicherheit des Kraftfahrzeugs erhöhenden Maßnahme ausgebildet ist, wozu das Sicherheitssystem ein der Maßnahme zugeordnetes Maßnahmensignal zur Ansteuerung wenigstens eines Fahrzeugsystems über ein Bus-System an das weitere Fahrzeugsystem übermittelt. Daneben betrifft die Erfindung ein Kraftfahrzeug.

Fahrdynamikregelungssysteme, auch bekannt unter den Begriffen ESC (englisch: "electronic stability control") bzw. ESP (deutsch: "elektronisches Stabilitätsprogramm"), sind im Stand der Technik bereits bekannt. Derartige Fahrerassistenzsysteme dienen der Stabilisierung des Kraftfahrzeugs, wobei durch das gezielte Abbremsen einzelner Räder des Kraftfahrzeugs eine Destabilisierung, insbesondere ein Schleudern und/oder Ausbrechen des Kraftfahrzeugs, vermieden werden soll. Insbesondere wird einem Verlassen des physikalischen Grenzbereichs dann entgegengewirkt, wenn ein Übersteuern oder ein Untersteuern droht. Mithin werden zur Unterstützung des Fahrers in kritischen Situationen und zur allgemeinen Stabilisierung des Kraftfahrzeugs gezielt Bremseingriffe vorgenommen. Die Zeitpunkte, zu denen Bremseingriffe des Fahrdynamikregelungssystems erfolgen, werden durch Eingriffskriterien bestimmt, die insbesondere aktuelle Fahrdynamikgrößen des Kraftfahrzeugs, wie sie innerhalb des Kraftfahrzeugs leicht bestimmt werden können, auswerten und hierbei insbesondere mit Eingriffsschwellwerten vergleichen, die letztlich die Sensibilität des Fahrdynamikregelungssystems bestimmen. Die konkrete Wahl der Eingriffsschwellwerte stellt dabei letztlich einen Kompromiss zwischen der Sicherheit (Stabilität des Kraftfahrzeugs) und der Robustheit des Fahrdynamikregelungssystems im Einsatz (Vermeidung unnötiger Eingriffe) dar. Dieser Kompromiss kann dazu führen, dass für einen ungeübten Fahrer die ESP-Abstimmung zu sportlich ist, mithin beispielsweise in kritischen Situationen eine zu geringe Unterstützung seitens des Fahrdynamikregelungssystems auftritt. Mit anderen Worten kann es vorkommen, dass das Fahrdynamikregelungssystem aufgrund der konkreten Ausgestaltung der Eingriffskriterien nicht früh genug reagiert, um auch einem ungeübten Fahrer das sichere Stabilisieren des Kraftfahrzeugs zu erlauben. Bekannte Fahrdynamikregelungssysteme der oben genannten Art sind zum Beispiel in den Dokumenten DE 10 2011 055685 A1 und DE 10 2011 085140 A1 offenbart.

Zur anderweitigen Erhöhung der Sicherheit im Kraftfahrzeug wurden bereits eine Vielzahl unterschiedlich ausgebildeter Sicherheitssysteme für Kraftfahrzeuge vorgeschlagen, die bei Erfüllung von die aktuelle Fahrsituation beschreibende Fahrsituationsdaten auswertenden Maßnahmenkriterien zur Durchführung von die Sicherheit des Kraftfahrzeugs erhöhenden Maßnahmen ausgebildet sind. Dabei sind beispielsweise Notbremsassistenten vorgeschlagen worden, die auf verschiedene Art und Weise, insbesondere abhängig von der Kritikalität der Situation, reagieren können, wenn ein potentiell mit dem Kraftfahrzeug kollidierendes Objekt detektiert wird. Beispielsweise ist hier ein gestuftes Vorgehen denkbar, so dass als erste Maßnahme bei einer niedrigen Kritikalität lediglich eine Warnausgabe an den Fahrer erfolgt, wobei weitere Maßnahmenstufen mit steigender Kritikalität eine Vorbefüllung der Bremse, Bremsrucke, Bremsunterstützungen oder gar starke Notbremseingriffe umfassen können. Um diese die Sicherheit des Kraftfahrzeugs erhöhenden Maßnahmen umzusetzen, müssen andere Fahrzeugsysteme, beispielsweise Ausgabemittel, Bremssysteme und dergleichen, angesteuert werden, kurz gesagt Aktoren des Kraftfahrzeugs genutzt werden, um die Maßnahmen zu realisieren. Hierzu ist das Sicherheitssystem, insbesondere also ein Steuergerät des Sicherheitssystems, mit anderen Fahrzeugsystemen über ein wenigstens einen Fahrzeugbus umfassendes Bussystem verbunden, beispielsweise einen CAN-Bus, so dass ein Maßnahmensignal vom Steuergerät des Sicherheitssystems an das bzw. die die Maßnahmen konkret umsetzenden Fahrzeugsysteme übermittelt werden kann.

Um die Fahrsituationsdaten zu gewinnen, nutzen Sicherheitssysteme im Allgemeinen Sensoren des Kraftfahrzeugs, insbesondere Umfeldsensoren, die Radarsensoren, Kameras und dergleichen umfassen können. Umfeldsensoren sind dazu geeignet, das Umfeld des Kraftfahrzeugs kontinuierlich zu beobachten, so dass eine Auswertung im Rahmen von Maßnahmenkriterien der Sicherheitssysteme erfolgen kann.

Der Erfindung liegt daher die Aufgabe zugrunde, die Unterstützung des Fahrers durch ein Fahrdynamikregelungssystem zu verbessern, ohne dessen Robustheit im Normalbetrieb zu verschlechtern.

Zur Lösung dieser Aufgabe ist bei einem Verfahren der eingangs genannten Art erfindungsgemäß vorgesehen, dass bei Detektion eines einer Maßnahme aus einer Gruppe von vorbestimmten Maßnahmen zugeordneten Maßnahmensignals durch das ebenso an das Bussystem angeschlossene Fahrdynamikregelungssystem dieses für eine vorbestimmte Zeitspanne von einem ersten, durch einen ersten Wert des wenigstens einen Eingriffsschwellwerts gekennzeichneten Normalbetriebsmodus in einen zweiten, durch einen zweiten Wert, der sensibler als der erste Wert gewählt ist, des Eingriffsschwellwerts gezeichneten Sicherheitsbetriebsmodus umgeschaltet wird, wobei das Maßnahmensignal an ein weiteres, nicht dem Fahrdynamikregelung entsprechendes Fahrzeugsystem gerichtet ist.

Im Wesentlich bedeutet dies, dass das Bussystem des Kraftfahrzeugs auf Maßnahmensignale überwacht wird, die sich zwar nicht zwangsläufig an das Fahrdynamikregelungssystem richten, dennoch jedoch anzeigen, dass eine kritische Situation vorliegen könnte, welche sensiblere Eingriffskriterien und somit Eingriffsschwellwerte benötigen könnte. Mithin wird vorgeschlagen, wenigstens einen Sicherheitsbetriebsmodus vorzusehen, in den umgeschaltet wird, falls bestimmte Maßnahmensignale, die Maßnahmen aus einer Gruppe von vorbestimmten Maßnahmen zugeordnet sind, durch das Fahrdynamikregelungssystem festgestellt werden. Dabei wird üblicherweise, um die Reaktion des Fahrdynamikregelungssystems sensibler zu gestalten, eine Reduzierung der (für eine Erfüllung des Eingriffskriteriums zu überschreitenden) Eingriffsschwellwerte erfolgen, das bedeutet, der zweite Wert ist dann kleiner als der erste Wert gewählt. Auf diese Weise wird ein früherer Eingriff ermöglicht, das bedeutet, Bremseingriffe treten bereits bei niedrigeren Fahrdynamikgrößen auf. Nach der vorbestimmten Zeitspanne wird dann wieder zurück in den Normalbetriebsmodus umgeschaltet, wobei es in Ausgestaltung der vorliegenden Erfindung auch denkbar ist, dass weitere, einer Maßnahme aus der Gruppe von vorbestimmten Maßnahmen zugeordnete Maßnahmensignale während der vorbestimmten Zeitspanne eine neue vorbestimmte Zeitspanne in Gang setzen. Die Dauer der vorbestimmten Zeitspanne kann im Allgemeinen als zwischen 5 bis 20 Sekunden liegen, insbesondere als 10 Sekunden, gewählt werden; es ist jedoch auch denkbar, worauf im Folgenden noch näher eingegangen werden wird, dass die Dauer der vorbestimmten Zeitspanne in Abhängigkeit der vorbestimmten Maßnahmen gewählt wird, auf die sich das detektierte Maßnahmensignal bezieht.

Das beschriebene Vorgehen ermöglicht es, seitens des Fahrdynamikregelungssystems selbst auf eine Auswertung von Fahrsituationsdaten bzw. diesen zugrundeliegenden Umfelddaten zu verzichten. Dadurch, dass andere Sicherheitssysteme des Kraftfahrzeugs diese Auswertung bereits vornehmen und mithin sicher kritischere Fahrsituationen erkennen können, ist es für die Zwecke der verbesserten Unterstützung des Fahrers in kritischen Situationen ausreichend, den Kommunikationsverkehr dieser Sicherheitssysteme zu beobachten. Die Identifikation von Fahrsituationen selbst, in denen der Sicherheitsbetriebsmodus zweckmäßiger ist, bleibt weiterhin den Sicherheitssystemen (bzw. diesen vorgeschalteten Systemen) überlassen, welche beispielsweise Sensordaten/Umfelddaten von Umfeldsensoren, beispielsweise Radarsensoren, Kameras und dergleichen, auswerten, um gegebenenfalls anhand der Maßnahmenkriterien Maßnahmen einzuleiten, deren zugehörige Maßnahmensignale das Vorliegen der kritischeren Fahrsituation für die Fahrdynamikregelung, also das ESP-System, indizieren. Die so zur Verfügung gestellten, sensibleren Eingriffsschwellen ermöglichen ein schnelleres Eingreifen des Fahrdynamikregelungssystems und stellen in der Folge dem Fahrer eine größere Unterstützung zur Verfügung, ohne dabei die Robustheit des Fahrdynamikregelungssystems generell zu beeinflussen, da im Normalbetriebsmodus weiterhin unnötige Bremseingriffe weitgehend vermieden werden.

Insgesamt ergibt sich also in der Anwendung der vorliegenden Erfindung eine Situation, dass während der Aktivität des Fahrdynamikregelungssystems im üblichen Betrieb des Kraftfahrzeugs Eingriffsschwellen so realisiert werden, dass ein sportlicher Charakter des Verhaltens des Kraftfahrzeuges hervorgehoben wird, mithin möglichst späte Bremseingriffe vorgesehen sind, so dass das Fahrdynamikregelungssystem insbesondere ein robustes Verhalten zeigt, also störende Bremseingriffe in unnötigen Situationen vermieden werden. Trotzdem für einen Teil der möglichen Fahrer diese Einstellung bereits ausreichend sein könnte, um in kritischen Fahrsituationen das Kraftfahrzeug sicher zu beherrschen, existieren auch Fahrer, für die die Unterstützung durch das Fahrdynamikregelungssystem im Normalbetriebsmodus zu spät ansprechen würde, so dass die stabilisierenden Bremseingriffe gemeinsam mit den Fahreraktionen nicht ausreichend sind, um das Kraftfahrzeug zu stabilisieren. Da erfindungsgemäß allerdings die Schwellen dann, wenn ein Sicherheitssystem eine mögliche Gefahr erkannt hat, sei sie real gegeben oder nicht, in einen Sicherheitsbetriebsmodus mit sensibleren Eingriffsschwellen umgeschaltet wird, ist ein früheres Eingreifen des Fahrdynamikregelungssystem gegeben und somit eine optimale Unterstützung auch für ungeübtere Fahrer.

Dabei sei noch darauf hingewiesen, dass durch die vorgesehene Umschaltung zwischen Betriebsmodi zumindest keine unmittelbare Anpassung der Intensität von Bremseingriffen erfolgt. Zwar ändert sich die Intensität zwangsläufig, da der Zeitpunkt des Bremseingriffes vorgezogen wird, jedoch ist beim vorgeschlagenen Vorgehen keine direkte Beeinflussung der Intensität von Bremseingriffen vorgesehen.

Während es im Rahmen der vorliegenden Erfindung am zweckmäßigsten ist, jeglichen Kommunikationsverkehr der Sicherheitssysteme auf kritischen Situationen indizierenden Maßnahmensignale zu überwachen, mithin auch an das Fahrdynamikregelungssystem selbst gerichtete Maßnahmensignale auszuwerten, die dann nicht den Umschaltvorgang als Maßnahme beschreiben (für die also die in dem an das Fahrdynamikregelungssystem gerichteten Maßnahmensignal enthaltene Steuerinformation zur Realisierung der Maßnahme nicht das Umschalten von dem Normalbetriebsmodus in den Sicherheitsbetriebsmodus beschreibt), werden erfindungsgemäß auch an andere Fahrzeugsysteme als das Fahrdynamikregelungssystem gerichtete Maßnahmensignale überwacht, das heißt, es ist vorgesehen, dass das (oder wenigstens eines des wenigstens einen) Maßnahmensignal an ein weiteres, nicht dem Fahrdynamikregelungssystem entsprechendes Fahrzeugsystem gerichtet ist. Insbesondere ist also auch eine Ausgestaltung denkbar, in der nicht einmal eine Maßnahmenanforderung an das Fahrdynamikregelungssystem vorgesehen ist, dennoch aber eine Umschaltung durch Überwachung der Kommunikation auf dem Bussystem möglich ist.

Zweckmäßigerweise können die vorbestimmten Maßnahmen der Gruppe wenigstens auf einen insbesondere einen Stärkeschwellwert für die Eingriffsstärke überschreitenden Bremseingriff gerichtete Maßnahmen des wenigstens einen Sicherheitssystems umfassen. Automatische Bremseingriffe von Sicherheitssystemen deuten häufig darauf hin, dass eine Fahrsituation vorliegt, in der auch ein fahrerseitiges Ausweichen, beispielsweise durch zu hektische Lenkbewegungen, auftreten kann, mithin eine für das Fahrdynamikregelungssystem relevante Gesamtsituation gegeben ist. In einer anderen Ausgestaltung ist es auch zweckmäßig, zusätzlich oder alternativ auf Lenkeingriffe von Sicherheitssystemen als vorbestimmte Maßnahmen abzustellen, wobei auch auf eine Vielzahl anderer Maßnahmensignale sinnvoll reagiert werden kann, die eine potentiell gefährliche Fahrsituation anzeigen, beispielsweise die Ausgabe von Warnungen an den Fahrer betreffende vorbestimmte Maßnahmen und dergleichen.

Eine zweckmäßige Weiterbildung der Erfindung sieht vor, dass verschiedenen vorbestimmten Maßnahmen und/oder verschiedenen eine vorbestimmte Maßnahme beschreibenden Maßnahmenparametern verschiedene Sicherheitsbetriebsmodi mit unterschiedlichen zweiten Werten und/oder verschiedene vorbestimmte Zeitspannen zugeordnet sind. Enthält letztlich das Maßnahmensignal und somit die vorbestimmte Maßnahme eine implizite Information über die Kritikalität bzw. Gefährlichkeit der aktuellen Fahrsituation, kann dies berücksichtigt werden, indem verschiedene Sicherheitsbetriebsmodi bzw. verschiedene vorbestimmte Zeitspannen für unterschiedliche vorbestimmte Maßnahmen vorgesehen werden, die letztlich an diese implizit enthaltene Kritikalitätsaussage gebunden sind. Besonders bevorzugt ist es dabei, wenn der zweite Wert der Sicherheitsbetriebsmodi mit steigender Maßnahmenstärke und/oder steigender, der Maßnahme zugrundeliegender Sicherheitskritikalität sensibler gewählt wird, insbesondere also sinkt. Beispielsweise können die Sicherheitsbetriebsmodi ein stufenartiges Verhalten eines Sicherheitssystems wiedergeben, so dass unterschiedliche zweite Werte der Eingriffsschwellwerte beispielsweise für unterschiedliche Warnstufen eines Notbremsassistenten festgelegt werden können, beispielsweise umfassend "Warnung des Fahrers", "Warnung + Vorkonditionierung der Bremsen", "Warnung + leichtes Bremsen", "Notbremsung".

Wie bereits erwähnt, ist es besonders zweckmäßig, wenn der Normalbetriebsmodus einer sportlichen, Bremseingriffe weitgehend vermeidenden Einstellung des Fahrdynamikregelungssystems entspricht, was der gewollten, durch das vorliegende Verfahren unterstützen Robustheit des Verhaltens der Fahrdynamikregelungssystems im Normalbetrieb entspricht.

Neben dem Verfahren betrifft die vorliegende Erfindung auch ein Kraftfahrzeug, aufweisend ein ein Steuergerät aufweisendes Fahrdynamikregelungssystem, das zur Durchführung wenigstens eines insbesondere nicht alle Räder des Kraftfahrzeugs betreffenden Bremseingriffs bei Erfüllung eines wenigstens einen Eingriffsschwellwert für wenigstens eine aktuelle Fahrdynamikgröße des Kraftfahrzeugs nutzenden Eingriffskriteriums ausgebildet ist und ein Sicherheitssystem, welches bei Erfüllung eines die aktuelle Fahrsituation beschreibende Fahrsituationsdaten auswertenden Maßnahmenkriteriums zur Durchführung einer die Sicherheit des Kraftfahrzeugs erhöhenden Maßnahme ausgebildet ist, wozu das Sicherheitssystem ein der Maßnahme zugeordnetes Maßnahmensignal zur Ansteuerung wenigstens eines (insbesondere weiteren, nicht dem Fahrdynamikregelungssystem entsprechenden) Fahrzeugsystems über ein Bussystem an das weitere Fahrzeugsystem übermittelt, welches sich dadurch auszeichnet, dass das Steuergerät zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können. Insbesondere ist das Steuergerät also ausgebildet, bei Detektion eines einer Maßnahme aus einer Gruppe von vorbestimmten Maßnahmen zugeordneten Maßnahmensignals dieses für eine vorbestimmte Zeitspanne von einem ersten, durch einen ersten Wert des wenigstens einen Eingriffsschwellwerts gekennzeichneten Normalbetriebsmodus in einen zweiten, durch einen zweiten Wert, der sensibler als der erste Wert gewählt ist, des Eingriffsschwellwerts gekennzeichneten Sicherheitsbetriebsmodus umgeschaltet wird.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: eine Verkehrssituation zur Erläuterung des erfindungsgemäßen Verfahrens.

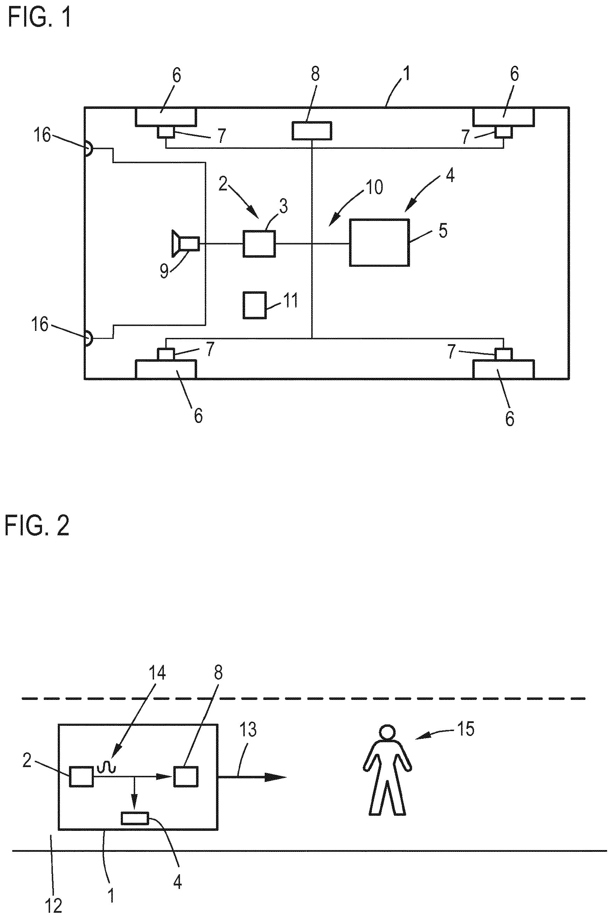

Fig. 1 zeigt eine Prinzipskizze eines erfindungsgemäßen Kraftfahrzeugs 1. Dieses weist ein Sicherheitssystem 2 mit einem zugeordneten Steuergerät 3 sowie ein Fahrdynamikregelungssystem 4 (ESP-System) mit einem zugeordneten Steuergerät 5 auf. Das Fahrdynamikregelungssystem 4 wertet Fahrdynamikgrößen des Kraftfahrzeugs 1 in Eingriffskriterien aus, wobei Eingriffsschwellwerte genutzt werden, um zu bestimmen, wann ein Bremseingriff an wenigstens einem Rad 6 des Kraftfahrzeugs 1 erfolgen soll, um das Kraftfahrzeug 1 zu stabilisieren und ein Schleudern/Ausbrechen zu vermeiden bzw. diesem entgegenzuwirken. Um radselektive Bremsvorgänge zu ermöglichen, ist den Rädern 6 hier jeweils ein Bremsaktor 7 zugeordnet.

Allgemeine Bremsvorgänge des Kraftfahrzeugs 1 werden durch ein Bremssystem 8 geregelt.

Das Sicherheitssystem 2 wertet Sensordaten verschiedener Umgebungssensoren, von denen beispielhaft Radarsensoren 16 und eine auf das Vorfeld des Kraftfahrzeugs gerichtete Kamera 9 gezeigt sind, als Umfelddaten aus, um insgesamt die aktuelle Fahrsituation beschreibende Fahrsituationsdaten zu ermitteln. Die Fahrsituationsdaten werden im Steuergerät 3 durch Maßnahmenkriterien ausgewertet, wobei bei Erfüllung eines Maßnahmenkriteriums eine die Sicherheit des Kraftfahrzeugs 1 erhöhende Maßnahme durchgeführt werden soll. Hierzu wird ein Maßnahmensignal, dass Ansteuerungsdaten für die wenigstens eine durchzuführende Maßnahme enthält, über ein Bussystem 10 des Kraftfahrzeugs 1 an die entsprechenden, die Maßnahme ausführenden anderen Fahrzeugsysteme übermittelt. Vorliegend handelt es sich bei dem Sicherheitssystem 2, wobei selbstverständlich auch mehr als ein Sicherheitssystem 2 vorgesehen sein kann, um ein Notbremssystem, welches für detektierte Objekte im Vorfeld des Kraftfahrzeugs 1 Kollisionswahrscheinlichkeiten bestimmt und bei bestimmten Schwellwerten für die Kollisionswahrscheinlichkeiten bestimmte Maßnahmen einleitet, beispielsweise bei weniger kritischen Fahrsituationen zunächst die Ausgabe einer Warnung über ein Anzeigemittel 11 und bei höheren Kritikalitätswerten, mithin höheren Kollisionswahrscheinlichkeiten, Bremsrucke sowie sich steigernde Bremseingriffe, mithin Längsführungseingriffe, über das Bremssystem 8.

Trotzdem sich keines der Maßnahmensignale des Sicherheitssystems 2 an das Fahrdynamikregelungssystem 4 richtet, überwacht dieses das Bussystem 10 ständig auf das Auftreten von Maßnahmensignalen, die wenigstens eine Maßnahme aus einer Gruppe vorbestimmter Maßnahmen betreffen. Vorliegend umfassen die vorbestimmten Maßnahmen wenigstens durch das Bremssystem 8 umzusetzende Bremsvorgänge, jedoch kann die Gruppe der vorbestimmten Maßnahmen selbstverständlich auch auf die Ausgabe von Warnungen über Anzeigemittel 11 und/oder für andere Sicherheitssysteme 2 erweitert werden. Die vorbestimmten Maßnahmen und mithin die Maßnahmensignale haben gemein, dass ihr Vorliegen auf eine detektierte, sicherheitskritische Fahrsituation hinweist. Es sei darauf hingewiesen, dass bei Sicherheitssystem, die sich auch mit Maßnahmen an das Fahrdynamikregelungssystem 4 richten (die nicht der Umschaltung des Betriebsmodus dienen), auch die entsprechenden Maßnahmensignale überwacht werden können und zusätzlich zu den durch die Steuerinformationen des Maßnahmensignals beschriebenen Maßnahmen auch festgestellt werden kann, dass eine sicherheitskritische Fahrsituation vorliegt.

Wird ein derartiges Maßnahmensignal, insbesondere eines, das eigentlich gar nicht an das Fahrdynamikregelungssystem 4 gerichtet ist, seitens des Steuergeräts 5 detektiert, wird dort von einem Normalbetriebsmodus in einen Sicherheitsbetriebsmodus umgeschaltet, der angepasste Eingriffsschwellwerte nutzt, die eine sensiblere Einstellung des Fahrdynamikregelungssystems 4 gegenüber dem Normalbetriebsmodus beschreiben. Mit anderen Worten ist das Fahrdynamikregelungssystem 4 im Normalbetriebsmodus eher sportlich für einen robusten Betrieb ohne unnötige Bremseingriffe eingestellt, während das Fahrdynamikregelungssystem 4 im Sicherheitsbetriebsmodus in jedem Fall sensibler, mithin im Allgemeinen früher, also bei niedrigeren Fahrdynamikgrößen, bereits anspricht und den Fahrer durch Bremseingriffe unterstützt. Der Sicherheitsbetriebsmodus wird für eine vorbestimmte Zeitspanne aufrechterhalten, beispielsweise als 10 Sekunden festgelegt oder aber als in Abhängigkeit von der vorbestimmten Maßnahme, der das Maßnahmensignal zugeordnet ist, vordefiniert. Auch der Sicherheitsbetriebsmodus kann in seiner konkreten Ausgestaltung von der durch das detektierte Maßnahmensignal beschriebenen vorbestimmten Maßnahme abhängig sein, indem bevorzugt die zweiten Werte der Eingriffsschwellwerte im Sicherheitsbetriebsmodus mit steigender Maßnahmenstärke und steigender, der Maßnahme zugrundeliegenden Sicherheitskritikalität sensibler gewählt sind, insbesondere also niedriger. Ein stufenweises Verhalten eines Sicherheitssystems 2, beispielsweise des Notbremssystems, kann auf ein stufenartiges Nutzen von Sicherheitsbetriebsmodi abgebildet werden.

Fig. 2 zeigt ein Beispiel zur Anwendung des erfindungsgemäßen Verfahrens, wie es durch das Steuergerät 5 ausgeführt wird. Das Kraftfahrzeug 1 bewegt sich dabei auf einer Straße 12 in einer Fahrtrichtung 13. Plötzlich betrifft ein Fußgänger 15 die Fahrbahn vor dem Kraftfahrzeug 1, der durch die Umfeldsensoren erfasst wird. Das Sicherheitssystem 2 stellt die Erfüllung eines Maßnahmenkriteriums fest, beispielsweise eines Notbremseingriffs, und gibt ein entsprechendes Maßnahmensignal 14 auf das Bussystem 10 des Kraftfahrzeugs 1. Dieses ist an das Bremssystem 8 adressiert, wird jedoch auch innerhalb des Fahrdynamikregelungssystems 4 detektiert und führt zur Umschaltung in den Sicherheitsbetriebsmodus aufgrund der von dem Sicherheitssystem 2 erkannten Gefahr. Der Fahrer könnte nun auf verschiedene Arten und Weisen reagieren, beispielsweise selbst bremsen, ausweichen oder kombiniert bremsen und ausweichen. Bei den letztgenannten Möglichkeiten besteht die Gefahr, dass der Fahrer durch zu hektische Lenkungen beim Ausweichen das Kraftfahrzeug 1 zum Schleudern bringt. Nachdem allerdings die Eingriffsschwellen im Sicherheitsbetriebsmodus reduziert sind, erhält der Fahrer eine schnellere und dadurch sichere Unterstützung durch das Fahrdynamikregelungssystem 4. Nach der vorbestimmten Zeitspanne wird wieder in den Normalbetriebsmodus zurückgekehrt, in dem die ersten Werte für den Eingriffsschwellwert verwendet werden.

## Patentansprüche

1. Verfahren zum Betrieb eines Fahrdynamikregelungssystems (4) eines Kraftfahrzeugs (1), wobei das Fahrdynamikregelungssystem (4) zur Durchführung wenigstens eines insbesondere nicht alle Räder (6) des Kraftfahrzeugs (1) betreffenden Bremseingriffs bei Erfüllung eines wenigstens einen Eingriffsschwellwert für wenigstens eine aktuelle Fahrdynamikgröße des Kraftfahrzeugs (1) nutzenden Eingriffskriteriums ausgebildet ist und das Kraftfahrzeug (1) ferner wenigstens ein Sicherheitssystem (2) aufweist, welches bei Erfüllung eines die aktuelle Fahrsituation beschreibende Fahrsituationsdaten auswertenden Maßnahmenkriteriums zur Durchführung einer die Sicherheit des Kraftfahrzeugs (1) erhöhenden Maßnahme ausgebildet ist, wozu das Sicherheitssystem (2) ein der Maßnahme zugeordnetes Maßnahmensignal (14) zur Ansteuerung wenigstens eines Fahrzeugsystems über ein Bussystem (10) an das weitere Fahrzeugsystem übermittelt,
**dadurch gekennzeichnet,**
**dass** bei Detektion eines einer Maßnahme aus einer Gruppe von vorbestimmten Maßnahmen zugeordneten Maßnahmensignals (14) durch das ebenso an das Bussystem (10) angeschlossene Fahrdynamikregelungssystem (4) dieses für eine vorbestimmte Zeitspanne von einem ersten, durch einen ersten Wert des wenigstens einen Eingriffsschwellwerts gekennzeichneten Normalbetriebsmodus in einen zweiten, durch einen zweiten Wert, der ein sensibler als der erste Wert gewählt ist, des Eingriffsschwellwerts gekennzeichneten Sicherheitsbetriebsmodus umgeschaltet wird, wobei das Maßnahmensignal (14) an ein weiteres, nicht dem Fahrdynamikregelungssystem (4) entsprechendes Fahrzeugsystem gerichtet ist.

2. Verfahren nach Anspruch 1,
**dadurch gekennzeichnet,**
**dass** die Dauer der vorbestimmten Zeitspanne als 5 bis 20 Sekunden, insbesondere 10 Sekunden, gewählt wird.

3. Verfahren nach einem der vorangehenden Ansprüche,
**dadurch gekennzeichnet,**
**dass** die vorbestimmten Maßnahmen der Gruppe wenigstens auf einen einen Stärkeschwellwert für die Eingriffsstärke überschreitenden Bremseingriff gerichtete Maßnahmen des wenigstens einen Sicherheitssystems umfassen.

4. Verfahren nach einem der vorangehenden Ansprüche,
**dadurch gekennzeichnet,**
**dass** verschiedenen vorbestimmten Maßnahmen und/oder verschiedenen eine vorbestimmte Maßnahme beschreibenden Maßnahmenparametern verschiedene Sicherheitsbetriebsmodi mit unterschiedlichen zweiten Werten und/oder verschiedene vorbestimmte Zeitspannen zugeordnet sind.

5. Verfahren nach Anspruch 4,
**dadurch gekennzeichnet,**
**dass** der zweite Wert der Sicherheitsbetriebsmodi mit steigender Maßnahmenstärke und/oder steigender, der Maßnahme zugrunde liegender Sicherheitskritikalität sinkt.

6. Verfahren nach einem der vorangehenden Ansprüche,
**dadurch gekennzeichnet,**
**dass** der Normalbetriebsmodus einer sportlichen, Bremseingriffe weitgehend vermeidenden Einstellung des Fahrdynamikregelungssystems (4) entspricht.

7. Kraftfahrzeug (1), aufweisend ein ein Steuergerät (5) aufweisendes Fahrdynamikregelungssystem (4), das zur Durchführung wenigstens eines insbesondere nicht alle Räder (6) des Kraftfahrzeugs (1) betreffenden Bremseingriffs bei Erfüllung eines wenigstens einen Eingriffsschwellwert für wenigstens eine aktuelle Fahrdynamikgröße des Kraftfahrzeugs (1) nutzenden Eingriffskriteriums ausgebildet ist, und ein Sicherheitssystem (2), welches bei Erfüllung eines die aktuelle Fahrsituation beschreibende Fahrsituationsdaten auswertenden Maßnahmenkriteriums zur Durchführung einer die Sicherheit des Kraftfahrzeugs (1) erhöhenden Maßnahme ausgebildet ist, wozu das Sicherheitssystem (2) ein der Maßnahme zugeordnetes Maßnahmensignal (14) zur Ansteuerung wenigstens eines Fahrzeugsystems über ein Bussystem (10) an das weitere Fahrzeugsystem übermittelt,
**dadurch gekennzeichnet,**
**dass** das Steuergerät (5) zur Durchführung eines Verfahrens nach einem der vorangehenden Ansprüche ausgebildet ist.

## Claims

1. Method for operating a driving dynamics system (4) of a motor vehicle (1), wherein the driving dynamics system (4) is configured to carry out at least one brake intervention, in particular one not affecting all wheels (6) of the motor vehicle (1), upon fulfilment of an intervention criterion using at least one intervention threshold value for at least one current vehicle dynamic variable of the motor vehicle (1) and the motor vehicle (1) has further at least one safety system (2), which, upon fulfilment of an action criterion evaluating the driving situation data describing the current driving situation, is configured to carry out an action increasing the safety of the motor vehicle (1), to which end the safety system (2) transmits an action signal (14) assigned to the action to control at least one vehicle system via a bus system (10) to the further vehicle system,
**characterised in**
**that**, upon detection of an action signal (14) assigned to an action from a group of predetermined actions by the driving dynamics system (4) likewise connected to the bus system (10), said action signal is switched for a predetermined time span from a first normal operating mode **characterised by** a first value of the at least one intervention threshold value into a second safe operating mode **characterised by** a second value, chosen to be more sensitive than the first value, of the intervention threshold value, wherein the action signal (14) is directed to a further vehicle system not corresponding to the driving dynamics system (4).

2. Method according to claim 1,
**characterised in**
**that** the duration of the predetermined time span is chosen as 5 to 20 seconds, in particular 10 seconds.

3. Method according to any one of the preceding claims,
**characterised in**
**that** the predetermined actions of the group comprise at least actions of the at least one safety system that are directed at a brake intervention exceeding a strength threshold value for the intervention strength.

4. Method according to any one of the preceding claims,
**characterised in**
**that** various safe operating modes with different second values and/or various predetermined time spans are assigned to various predetermined actions and/or various action parameters describing a predetermined action.

5. Method according to claim 4,
**characterised in**
**that** the second value of the safe operating modes decreases with increasing action strength and/or increasing safety criticality underlying the action.

6. Method according to any one of the preceding claims,
**characterised in**
**that** the normal operating mode corresponds to a sport setting of the driving dynamics system (4) that largely avoids brake interventions.

7. Motor vehicle (1), having a driving dynamics system (4) with a control apparatus (5), which driving dynamics system is configured to carry out at least one brake intervention, in particular one not affecting all wheels (6) of the motor vehicle (1), upon fulfilment of an intervention criterion using at least one intervention threshold value for at least one current vehicle dynamic variable of the motor vehicle (1), and a safety system (2), which, upon fulfilment of an action criterion evaluating the driving situation data describing the current driving situation, is configured to carry out an action increasing the safety of the motor vehicle (1), to which end the safety system (2) transmits an action signal (14) assigned to the action to control at least one vehicle system via a bus system (10) to the further vehicle system,
**characterised in**
**that** the control apparatus (5) is configured to carry out a method according to any one of the preceding claims.

## Revendications

1. Procédé de fonctionnement d'un système de régulation de la dynamique de conduite (4) d'un véhicule automobile (1), dans lequel le système de régulation de la dynamique de conduite (4) est réalisé pour la réalisation d'au moins une intervention de freinage concernant en particulier pas toutes les roues (6) du véhicule automobile (1) lors de la satisfaction d'un critère d'intervention utilisant au moins une valeur seuil d'intervention pour au moins une grandeur de dynamique de conduite actuelle du véhicule automobile (1) et le véhicule automobile (1) présente en outre au moins un système de sécurité (2), lequel est réalisé lors de la satisfaction d'un critère de mesure évaluant des données de la situation de conduite décrivant la situation de conduite actuelle pour la réalisation d'une mesure augmentant la sécurité du véhicule automobile (1), ce pour quoi le système de sécurité (2) transmet un signal de mesure (14) associé à la mesure pour le pilotage d'au moins un système de véhicule par le biais d'un système de bus (10) à l'autre système de véhicule,
**caractérisé en ce**
**qu'**en cas de détection d'un signal de mesure (14) associé à une mesure d'un groupe de mesures prédéterminées par le système de régulation de la dynamique de conduite (4) raccordé également au système de bus (10), celui-ci est commuté pendant une période prédéterminée d'un premier mode de fonctionnement normal **caractérisé par** une première valeur de l'au moins une valeur seuil d'intervention à un deuxième mode de fonctionnement de sécurité **caractérisé par** une deuxième valeur, qui est sélectionnée plus sensible que la première valeur, de la valeur seuil d'intervention, dans lequel le signal de mesure (14) est dirigé vers un autre système de véhicule ne correspondant pas au système de régulation de la dynamique de conduite (4).

2. Procédé selon la revendication 1,
**caractérisé en ce**
**que** la durée de la période prédéterminée est sélectionnée en tant que 5 à 20 secondes, en particulier 10 secondes.

3. Procédé selon l'une quelconque des revendications précédentes,
**caractérisé en ce**
**que** les mesures prédéterminées du groupe comprennent au moins des mesures dirigées vers une intervention de freinage dépassant une valeur seuil d'intensité pour l'intensité d'intervention de l'au moins un système de sécurité.

4. Procédé selon l'une quelconque des revendications précédentes,
**caractérisé en ce**
**que** différents modes de fonctionnement de sécurité avec différentes deuxièmes valeurs et/ou différentes périodes prédéterminées sont associés à différentes mesures prédéterminées et/ou différents paramètres de mesure décrivant une mesure prédéterminée.

5. Procédé selon la revendication 4,
**caractérisé en ce**
**que** la deuxième valeur des modes de fonctionnement de sécurité diminue avec l'augmentation de l'intensité de mesure et/ou l'augmentation de la criticité de sécurité à la base de cette mesure.

6. Procédé selon l'une quelconque des revendications précédentes,
**caractérisé en ce**
**que** le mode de fonctionnement normal correspond à un réglage sportif, évitant largement des interventions de freinage, du système de régulation de la dynamique de conduite (4).

7. Véhicule automobile (1), présentant un système de régulation de la dynamique de conduite (4) présentant un appareil de commande (5), qui est réalisé pour la réalisation d'au moins une intervention de freinage concernant en particulier pas toutes les roues (6) du véhicule automobile (1) lors de la satisfaction d'un critère d'intervention utilisant au moins une valeur seuil d'intervention pour au moins une grandeur de dynamique de conduite actuelle du véhicule automobile (1) et un système de sécurité (2), lequel est réalisé lors de la satisfaction d'un critère de mesure évaluant des données de la situation de conduite décrivant la situation de conduite actuelle pour la réalisation d'une mesure augmentant la sécurité du véhicule automobile (1), ce pour quoi le système de sécurité (2) transmet un signal de mesure (14) associé à la mesure pour le pilotage d'au moins un système de véhicule par le biais d'un système de bus (10) à l'autre système de véhicule,
**caractérisé en ce**
**que** l'appareil de commande (5) est réalisé pour la réalisation d'un procédé selon l'une quelconque des revendications précédentes.
